# EUROPEAN PATENT APPLICATION

(11) **EP 4 733 545 A1**
(43) Date of publication of application: **29.04.2026**
(21) Application number: 24732378.5
(22) Date of filing: 16.01.2024
(51) Int. Cl.: E21F 5/00, E21F 5/02, E21F 17/18

(54) **COAL MINE RUBBER-TYRED VEHICLE AUXILIARY TRANSPORT ROADWAY ACCUMULATED DUST CLEANING SYSTEM**

(30) Priority: 23.05.2023 CN 202310585179
(71) Applicant: CCTEG Chongqing Research Institute, Chongqing 400039 (CN)
(72) Inventor: LIU, Kui, Chongqing 400039 (CN); GONG, Xiaobing, Chongqing 400039 (CN); ZHAO, Zhongtai, Chongqing 400039 (CN); LI, Dewen, Chongqing 400039 (CN); GUO, Shengjun, Chongqing 400039 (CN); LIANG, Aichun, Chongqing 400039 (CN); WU, Liang, Chongqing 400039 (CN); CHEN, Bo, Chongqing 400039 (CN); LU, Ke, Chongqing 400039 (CN); LI, Dingfu, Chongqing 400039 (CN); DENG, Zhihui, Chongqing 400039 (CN); LIU, Guoqing, Chongqing 400039 (CN); MA, Daihui, Chongqing 400039 (CN); HAO, Zhong, Chongqing 400039 (CN)
(74) Representative: Chung, Hoi Kan
(86) International application number: PCT/CN2024/072537
(87) International publication number: WO 2024/239680

(57) **Abstract**

The present invention belongs to the technical field of coal mine roadway dust automatic cleaning. The present invention relates to a dust cleaning system for coal mine rubber-tired cart auxiliary transport roadways, comprising a plurality of coal mine rubber-tired cart auxiliary transport roadway dust cleaning robots, a plurality of coal mine roadway dust online monitoring stations, a plurality of charging stations, a plurality of coal mine underground autonomous water filling stations and a central control system. The present invention realizes classified cleaning of dust in coal mine rubber-tired cart auxiliary transport roadways, and realizes automatic, intelligent and efficient cleaning operations.

## Description

### Field of invention

The present invention belongs to the technical field of coal mine roadway dust automatic cleaning, and relates to a dust cleaning system for coal mine rubber-tired cart auxiliary transport roadways.

### Background art of the invention

A coal mine rubber-tired cart auxiliary transport roadway is an important part of coal mine production and operations; personnel, materials, equipment, supplies, etc., must be transported through an auxiliary transport roadway in addition to coal. Coal mine rubber-tired cart auxiliary transport roadways mainly comprise two forms: rail transport roadways and trackless rubber-tired cart transport roadways. At present, coal mine auxiliary transport roadways in both domestic and foreign well works adopt manual driving and manual scheduling, the system and equipment intelligence levels of which are low. Relevant research on vehicle intelligence and autonomous driving at home and abroad mainly focuses on civilian and military vehicles. In the field of coal, relevant research on auxiliary transport roadway intelligence and autonomous driving technology & equipment is still blank.

Due to complex and changeable underground environments, adverse factors such as dust deposition, water accumulation and harmful gas in auxiliary transport roadways have brought great difficulties to cleaning operation of the auxiliary transport roadways. At present, main cleaning methods of coal mine roadways include manual cleaning, mechanical cleaning and wet cleaning. Among which, manual cleaning is time-consuming, laborious, inefficient, and harmful to health of workers; mechanical cleaning has improved efficiency, but requires complex and expensive equipment, and dust on power pipelines cannot be effectively removed; by wet cleaning, dust can be effectively removed, but it needs to consume a lot of water, and humidity and corrosion in the roadways will be increased.

Therefore, developing an efficient and intelligent dust cleaning system suitable for underground environments is of great significance to improving underground air quality, ensuring traffic smoothness and safety of the auxiliary transport roadways, and improving utilization rate and production efficiency of the auxiliary transport roadways. A coal mine roadway is an important place of coal mine production and transport, and is also an important link of coal mine safety production. A lot of dust exist in the coal mine roadways, which not only affects health and work efficiency of workers, but also easily causes serious accidents such as dust explosion. Therefore, regular cleaning of the coal mine roadways is a necessary measure to ensure coal mine safety production.

### Disclosure of the invention

In view of this, the purpose of the present invention is to solve the problem of coal mine roadway dust automatic cleaning, and provide a dust cleaning system for coal mine rubber-tired cart auxiliary transport roadways.

To achieve the above purpose, the present invention provides the following technical solution:
A dust cleaning system for coal mine rubber-tired cart auxiliary transport roadways, comprising coal mine rubber-tired cart auxiliary transport roadway dust cleaning robots, coal mine roadway dust online monitoring stations, charging stations, coal mine underground autonomous water filling stations and a central control system;
The coal mine rubber-tired cart auxiliary transport roadway dust cleaning robots, the dust online monitoring stations, the charging stations and the coal mine underground autonomous water filling stations are connected with the central control system and controlled by the central control system;
A plurality of coal mine rubber-tired cart auxiliary transport roadway dust cleaning robots are scheduled by the central control system to travel in a coal mine roadway to clean power pipelines in the roadway, two side walls of the roadway, ceiling of the roadway and floor of the roadway;
The coal mine roadway dust online monitoring stations are fixedly arranged on the side walls of the roadway, and are used for monitoring dust deposition condition on the side walls of the roadway; cleaning parameters of the coal mine rubber-tired cart auxiliary transport roadway dust cleaning robots are controlled by the central control system according to the dust deposition condition fed back by the coal mine roadway dust online monitoring stations;
The charging stations are arranged in the parking lot outside the roadway, and are used for charging the coal mine rubber-tired cart auxiliary transport roadway dust cleaning robots;
A plurality of coal mine underground autonomous water filling stations are arranged in the roadway at a set spacing, and are used for supplying water to the coal mine rubber-tired cart auxiliary transport roadway dust cleaning robots.

Further, each coal mine rubber-tired cart auxiliary transport roadway dust cleaning robot comprises a coal mine power facility dust wet wiping device, a wet dust flushing device, an automatic navigation system and an electro-hydraulic control system which are arranged on an electrically driven rubber-tired traveling platform; the electrically driven rubber-tired traveling platform, the coal mine power facility dust wet wiping device, the wet dust flushing device and the automatic navigation system are connected with the electro-hydraulic control system; the electro-hydraulic control system is communicated with the central control system;
The electrically driven rubber-tired traveling platform, the coal mine power facility dust wet wiping device and the wet dust flushing device are provided with sensors used for detecting positions and operating states thereof, the sensors are connected with the electro-hydraulic control system, and the devices are controlled to operate by the electro-hydraulic control system according to signals of the sensors;
The electrically driven rubber-tired traveling platform is navigated by the automatic navigation system to travel, and is controlled by the electro-hydraulic control system to operate in the coal mine roadway; the coal mine power facility dust wet wiping device is arranged on a front end of the electrically driven rubber-tired traveling platform, and is controlled by the electro-hydraulic control system to clean dust on the power pipelines in the roadway; the wet dust flushing device is controlled by the electro-hydraulic control system to clean dust on the two side walls, the ceiling and the floor of the roadway.

Further, the coal mine power facility dust wet wiping device comprises a transverse positioning and moving device, a wet wiping mechanical arm and a coal mine roadway cable dust wiping device; the transverse positioning and moving device is fixed on the front end of the electrically driven rubber-tired traveling platform, the coal mine roadway cable dust wiping device is arranged on an upper end of the wet wiping mechanical arm, and the wet wiping mechanical arm is rotationally connected with the transverse positioning and moving device through a hydraulic rotating disk; the wet wiping mechanical arm is driven by the transverse positioning and moving device to realize transverse movement, and is driven by the hydraulic rotating disk to realize circumferential angle adjustment; the coal mine roadway cable dust wiping device is driven by the wet wiping mechanical arm to realize position and angle adjustment.

Further, the coal mine roadway cable dust wiping device comprises a roller mounting rack, a roller brush and a spray device; the roller brush is rotationally installed on the roller mounting rack through a rotating shaft; a spiral swing hydraulic motor is arranged between the roller mounting rack and the mechanical arm, and the roller mounting rack is driven by the spiral swing hydraulic motor to rotate to adjust an angle of the roller brush;
The rotating shaft is connected with a hydraulic gerotor motor, and the roller brush is driven by the hydraulic gerotor motor to rotate and wipe a cable; the spray device is fixedly arranged on the roller mounting rack and sprays towards the roller brush; the wet wiping mechanical arm comprises a first articulated arm and a second articulated arm; one end of the first articulated arm is hinged with the rotating disk, and the other end is hinged with the second articulated arm; the coal mine roadway cable dust wiping device is hinged with one end of the second articulated arm away from the first articulated arm; hydraulic cylinders are hinged between the first articulated arm and the rotating disk, between the first articulated arm and the second articulated arm, and between the second articulated arm and the coal mine roadway cable dust wiping device, respectively, and relative rotation is realized through the hydraulic cylinders.

Further, the transverse positioning and moving device comprises a sliding table base, a sliding plate and a multistage hydraulic cylinder; the hydraulic rotating disk is arranged on the sliding plate, the sliding table base is provided with a sliding guide rail arranged transversely, and the sliding plate is slidably arranged on the sliding guide rail; the sliding plate is connected with the multistage hydraulic cylinder and is driven by the multistage hydraulic cylinder to realize transverse displacement; the hydraulic rotating disk is provided with a mounting position used for connecting the wet wiping mechanical arm.

Further, the wet dust flushing device comprises a coal mine roadway side wall wet flushing device, a coal mine roadway ceiling wet flushing device and a roadway floor wet flushing device; the coal mine roadway side wall wet flushing device and the coal mine roadway ceiling wet flushing device adopt a telescopic structure to adapt to a size of the roadway; the roadway floor wet flushing device is arranged below the electrically driven rubber-tired traveling platform to flush the floor of the roadway downwards; the coal mine roadway ceiling wet flushing device is arranged on a rear end of the electrically driven rubber-tired traveling platform to flush the ceiling of the roadway upwards; the coal mine roadway side wall wet flushing device is also arranged on the rear end of the electrically driven rubber-tired traveling platform to flush the two side walls of the roadway sidewards.

Further, the coal mine roadway side wall wet flushing device comprises lifting arms, telescopic arms and water spray frames; the telescopic arms are fixedly arranged on the lifting arms, and the water spray frames are fixedly arranged on one end of each telescopic arm away from the lifting arms; the water spray frames are provided with spray heads; the water spray frames are driven by the lifting arms and the telescopic arms to realize transverse and height position adjustment relative to the two side walls of the roadway; each water spray frame comprises a main pipe and a plurality of branch pipes, the main pipe is connected with the telescopic arms, the branch pipes are perpendicularly connected with the main pipe and uniformly distributed along the main pipe; the spray heads are arranged on end parts of the branch pipes and aligned with the two side walls along an axis direction of each branch pipe; two telescopic arms are telescoped towards two ends of the lifting arms, respectively, and each telescopic arm is provided with at least one water spray frame.

Further, the coal mine roadway ceiling wet flushing device comprises a water spray frame and a lifting mechanism; the water spray frame is fixed on a top end of the lifting mechanism, and the water spray frame is driven by the lifting mechanism to rise and fall to adapt to a height of the ceiling; the water spray frame is provided with a plurality of nozzles, and the nozzles are communicated with a water pumping device to spray water and flush the ceiling of the roadway; the water spray frame comprises a water collecting pipe and a guide frame; the water collecting pipe is arranged on the guide frame, and the guide frame is arranged on the top end of the lifting mechanism and is slidably connected with the lifting mechanism; the guide frame is driven by the lifting mechanism to slide up and down, thereby driving the water collecting pipe to move; a rotating mechanism is arranged between the water collecting pipe and the guide frame, and an angle of the water collecting pipe is adjusted by the rotating mechanism, thereby changing an included angle between a water flow of each nozzle and the ceiling.

Further, each coal mine underground autonomous water filling station comprises a fixed platform, a water filling control system, an electric control valve, a water filling pipe and a water pipe retracting/extending device; the fixed platform is fixedly arranged on one side wall of the roadway or hoisted on the ceiling of the roadway, and is at a set height from the floor of the roadway; the water filling control system, the electric control valve, the water filling pipe and the water pipe retracting/extending device are arranged on the fixed platform; the electric control valve is arranged on the water filling pipe; the electric control valve and the water pipe retracting/extending device are connected with the water filling control system and controlled by the water filling control system; the water filling control system is communicated with the central control system;
A water outlet end of the water filling pipe is connected with the water pipe retracting/extending device and controlled by the water pipe retracting/extending device, thus to make the water filling pipe drain water vertically downwards when filling water and bend horizontally in the fixed platform when being stored; the water filling pipe comprises a water inlet pipe and a movable pipe; the water inlet pipe is fixed on the fixed platform; the movable pipe is connected with the water pipe retracting/extending device, and is communicated with the water inlet pipe through a corrugated pipe; the movable pipe is driven by the water pipe retracting/extending device to realize vertical and horizontal bending;
The electrically driven rubber-tired traveling platform is also provided with an automatic water filling tank; the automatic water filling tank comprises a tank body, a water tank cover and a cover opening mechanism; a bottom of the tank body is provided with a water outlet pipe; the water outlet pipe is connected with the coal mine power facility dust wet wiping device and the wet dust flushing device, respectively, and is used for supplying cleaning water; a liquid level sensor is arranged in the tank body, the water tank cover is rotationally arranged on a water inlet of the tank body through the cover opening mechanism, and the water tank cover is driven by the cover opening mechanism according to liquid level information fed back by the liquid level sensor to realize opening and closing of the water inlet; a lifting mechanism and a telescopic corrugated pipe are arranged in the water inlet, the lifting mechanism is fixedly arranged in the water inlet, one end of the corrugated pipe is fixedly arranged in the water inlet, and the other end is connected with a telescopic end of the lifting mechanism to be driven by the lifting mechanism to extend or retract along the water inlet; the automatic water filling tank cooperates with the coal mine underground autonomous water filling station to realize automatic water filling.

Further, each coal mine roadway dust online monitoring station comprises a monitoring system, a moving guide rail and a dust thickness sensor; the dust thickness sensor is slidably arranged on the moving guide rail, and is used for detecting the dust deposition condition on the side walls of the roadway; the moving guide rail is fixedly arranged on the side walls of the roadway; the dust thickness sensor is connected with the monitoring system, the monitoring system is communicated with the central control system, and data of the dust thickness sensor is acquired and a dust thickness is output to the central control system by the monitoring system;
The moving guide rail is provided with a traction device, the dust thickness sensor is arranged on the traction device, and the traction device is in sliding fit with the moving guide rail and is controlled by the monitoring system to slide along the moving guide rail;
A lifting mechanism is fixedly arranged on the traction device, and the lifting mechanism is connected with the monitoring system; the dust thickness sensor is arranged on the lifting mechanism, and is driven by the lifting mechanism to realize up and down displacement.

The present invention has the following beneficial effects:
1. The present invention provides a dust cleaning system for coal mine rubber-tired cart auxiliary transport roadways, comprising a plurality of coal mine rubber-tired cart auxiliary transport roadway dust cleaning robots, a plurality of coal mine roadway dust online monitoring stations, a plurality of charging stations, a plurality of coal mine underground autonomous water filling stations and a central control system, which realizes automatic, intelligent and efficient cleaning operations, improves air quality and safety in a roadway, and reduces cost and risk of manual cleaning.
2. Each coal mine rubber-tired cart auxiliary transport roadway dust cleaning robot used in the present invention comprises an electrically driven rubber-tired traveling platform, a coal mine power facility dust wet wiping device, a wet dust flushing device, an automatic navigation system, an electro-hydraulic control system and a plurality of sensors, which realizes the functions of wet wiping of power pipelines in the roadway and wet flushing of two side walls, ceiling and floor of the roadway, effectively removes dust on the power pipelines and the side walls of the roadway, and ensures normal operation of power facilities and traffic smoothness of the roadway.
3. The coal mine power facility dust wet wiping device used in the present invention comprises a transverse positioning and moving device, a wet wiping mechanical arm and a cable dust wiping device, which realizes multi-angle and multi-direction wiping operation of the power pipelines; the roller brush and the spray device are used for wet wiping of the power pipelines, which increases wiping effect and efficiency.
4. The wet dust flushing device used in the present invention comprises a coal mine roadway side wall wet flushing device, a coal mine roadway ceiling wet flushing device and a roadway floor wet flushing device, which realizes omnidirectional flushing operations of the two side walls and the floor of the roadway; the telescopic structure and the lifting mechanism are used to adapt to different sizes of roadways, and the spray heads or nozzles are used to spray water or other cleaning liquids to corresponding positions and flush off the dust.
5. Each coal mine underground autonomous water filling station used in the present invention comprises a fixed platform, a water filling control system, an electric control valve, a water filling pipe and a water pipe retracting/extending device, which realizes the function of automatic water filling of the automatic water filling tank of the robots; the water filling station is fixed on one side wall of the roadway or hoisted on the ceiling of the roadway by the fixed platform, and is at a set height from the floor of the roadway, and the water filling pipe and the water pipe retracting/extending device are used to make the water filling pipe drain water vertically downwards when filling water and bend horizontally in the fixed platform when being stored, which solves the problem of automatic water supply in a cleaning process.
6. The automatic water filling tank used in the present invention comprises a tank body, a water tank cover, a cover opening mechanism and a liquid level sensor, which realizes the function of supplying cleaning water for the coal mine power facility dust wet wiping device and the wet dust flushing device of the robot; the liquid level sensor is arranged in the tank body to control the opening and closing of the water inlet according to the liquid level information, and a lifting mechanism and a telescopic corrugated pipe are arranged in the water inlet to connect the water inlet with the water filling pipe of the water filling station, which realizes the need for automatic water replenishment in the cleaning process.
7. Each coal mine roadway dust online monitoring station used in the present invention comprises a monitoring system, a moving guide rail and a dust thickness sensor, which realizes the function of online monitoring of the dust deposition condition on the side walls of the roadway; the monitoring station is fixed on one side wall of the roadway by the moving guide rail, and the dust thickness sensor can slide along the moving guide rail and is driven by the lifting mechanism to realize up and down displacement; data of the dust thickness sensor is acquired and a dust thickness is output to the central control system by the monitoring system, which realizes real-time dust deposition monitoring and cleaning quality feedback of the roadway.

Other advantages, objectives and features of the present invention will be illustrated in the following description to some extent, and will be apparent to those skilled in the art based on the following investigation and research to some extent, or can be taught from the practice of the present invention. The objectives and other advantages of the present invention can be realized and obtained through the following description.

### Description of the drawings

To enable the purpose, the technical solution and the advantages of the present invention to be more clear, the present invention will be preferably described in detail below in combination with the drawings, wherein:
Fig. 1 is a schematic diagram of a dust cleaning system for coal mine rubber-tired cart auxiliary transport roadways in the present invention.
Fig. 2 is an arrangement schematic diagram of a dust cleaning system for coal mine rubber-tired cart auxiliary transport roadways in the present invention.
Fig. 3 is an overall schematic diagram of a coal mine rubber-tired cart auxiliary transport roadway dust cleaning robot in the present invention.
Fig. 4 is a schematic diagram of an electrically driven rubber-tired traveling platform in the present invention.
Fig. 5 is an overall schematic diagram of a coal mine power facility dust wet wiping device in the present invention.
Fig. 6 is an axonometric drawing of a coal mine power facility dust wet wiping device in the present invention.
Fig. 7 is a control diagram of a spray device in the present invention.
Fig. 8 is a schematic diagram of a rotating disk in the present invention.
Fig. 9 is a schematic diagram of a transverse positioning and moving device in the present invention.
Fig. 10 is an overall schematic diagram of a coal mine roadway side wall wet flushing device in the present invention.
Fig. 11 is a front view of a coal mine roadway side wall wet flushing device in the present invention.
Fig. 12 is an overall schematic diagram of a coal mine roadway ceiling wet flushing device in the present invention.
Fig. 13 is a schematic diagram of a lifting mechanism in a coal mine roadway ceiling wet flushing device.
Fig. 14 is an overall schematic diagram of an automatic water filling tank in the present invention.
Fig. 15 is a schematic diagram of a coal mine roadway dust online monitoring station in the present invention.
Fig. 16 is an overall schematic diagram of a coal mine underground autonomous water filling station in the present invention.

Reference signs: 1-coal mine rubber-tired cart auxiliary transport roadway dust cleaning robot; 2-coal mine roadway dust online monitoring station; 3-charging station; 4-coal mine underground autonomous water filling station; 5-central control system; 6-power pipeline;
11-electrically driven rubber-tired traveling platform; 12-coal mine power facility dust wet wiping device; 13-coal mine roadway side wall wet flushing device; 14-coal mine roadway ceiling wet flushing device; 15-roadway floor wet flushing device; 16-automatic water filling tank; 17-electro-hydraulic control system; 111-power assembly system; 112-electrical system; 113-explosion-proof battery box; 114-console; 115-wire-controlled pedal; 116-motor; 117-mining explosion-proof electric steering system; 118-explosion-proof wheel; 121-roadway cable dust wiping device; 122-wet wiping mechanical arm; 123-rotating disk; 124-transverse positioning and moving device; 125-wet cleaning control system; 1211-roller mounting rack; 1212-roller brush; 1213-spray device; 1214-rotating shaft; 1215-spiral swing hydraulic motor; 1216-hydraulic gerotor motor; 1217-distance sensor; 1218-cable perception sensor; 1219-flow-pressure adjustment device; 122-wet wiping mechanical arm; 1221-first articulated arm; 1222-second articulated arm; 1223-first hydraulic cylinder; 1224-second hydraulic cylinder; 123-rotating disk; 1231-pivoting support; 1232-hydraulic motor; 124-transverse positioning and moving device; 1241-sliding table base; 1242-sliding plate; 1243-multistage hydraulic motor; 1244-sliding guide rail; 125-wet cleaning control system; 131-base; 132-lifting arm; 133-telescopic arm; 134-water spray frame; 1321-lifting cylinder; 1322-guide post; 1323-sliding block; 1331-telescopic cylinder; 1332-metal pipe; 135-spray head; 136-steering mechanism; 137-side wall control system; 141-water spray frame; 142-lifting mechanism; 143-ceiling control system; 144-nozzle; 145-guide frame; 146-rotating mechanism; 147-fixed frame; 148-lifting cylinder; 149-distance meter; 161-tank body; 162-water tank cover; 163-cover opening mechanism; 164-liquid level sensor; 165-corrugated pipe; 166-lifting mechanism; 167-lidar; 168-water tank control system; 21-monitoring system; 22-display screen; 23-moving guide rail; 24-traction device; 25-lifting mechanism; 26-dust thickness sensor; 27-mounting rack; 28-rotating device; 41-fixed platform; 42-water filling control system; 43-electric control valve; 44-water inlet pipe; 45-movable pipe; 46-water pipe retracting/extending device; 46-fixed frame; 47-cylinder; 48-bending frame.

### Detailed description of the invention

Embodiments of the present invention are described below through specific embodiments. Those skilled in the art can understand other advantages and effects of the present invention easily through the disclosure of the description. The present invention can also be implemented or applied through additional different specific embodiments. All details in the description can be modified or changed based on different perspectives and applications without departing from the spirit of the present invention. It should be noted that the figures provided in the following embodiments only exemplarily explain the basic conception of the present invention, and if there is no conflict, the following embodiments and the features in the embodiments can be mutually combined.

Wherein the drawings are only used for exemplary description, are only schematic diagrams rather than physical diagrams, and shall not be understood as a limitation to the present invention. In order to better illustrate the embodiments of the present invention, some components in the drawings may be omitted, scaled up or scaled down, and do not reflect actual product sizes. It should be understandable for those skilled in the art that some well-known structures and description thereof in the drawings may be omitted.

Same or similar reference numerals in the drawings of the embodiments of the present invention refer to same or similar components. It should be understood in the description of the present invention that terms such as "upper", "lower", "left", "right", "front" and "back" indicate direction or position relationships shown based on the drawings, and are only intended to facilitate the description of the present invention and the simplification of the description rather than to indicate or imply that the indicated device or element must have a specific direction or constructed and operated in a specific direction, and therefore, the terms describing position relationships in the drawings are only used for exemplary description and shall not be understood as a limitation to the present invention; for those ordinary skilled in the art, the meanings of the above terms may be understood according to specific conditions.

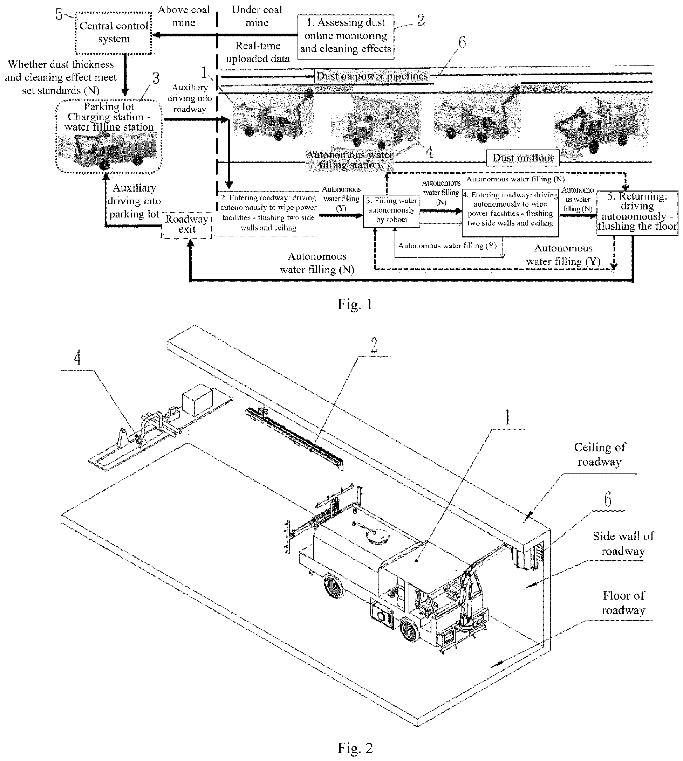

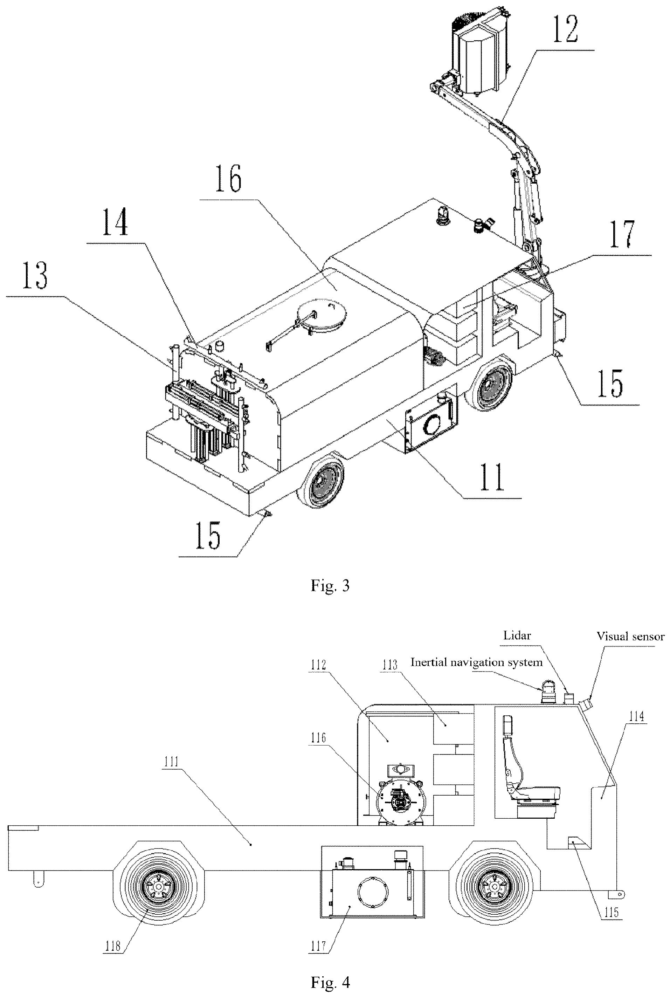

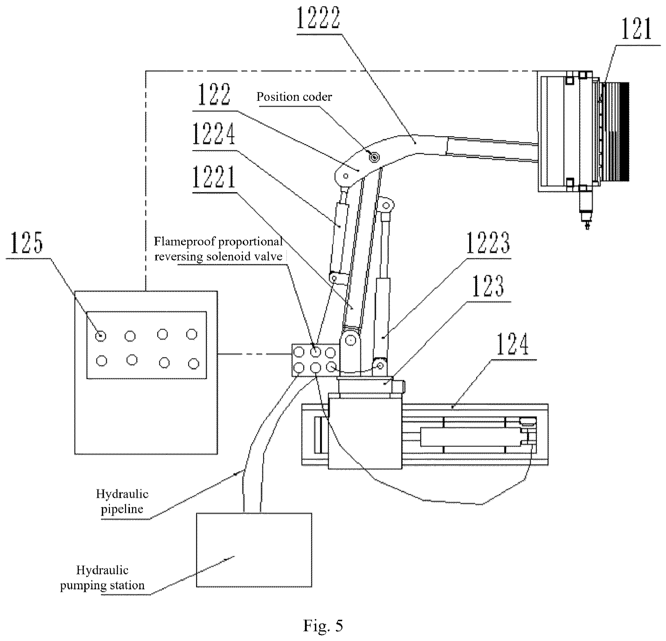

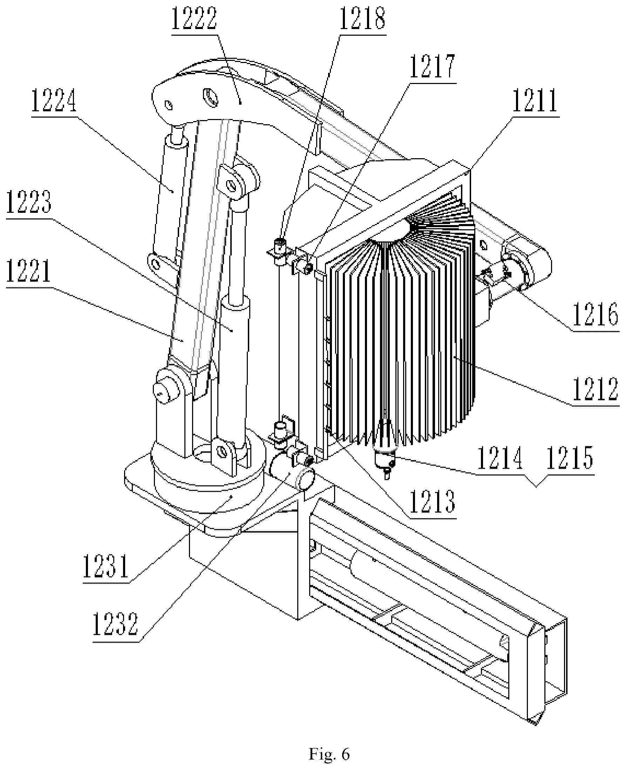

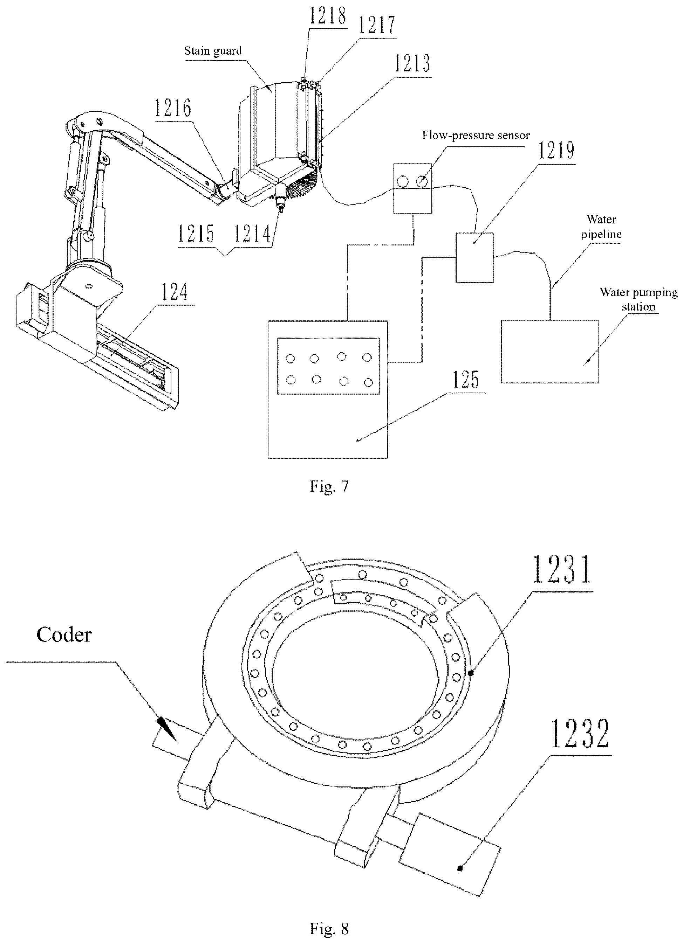

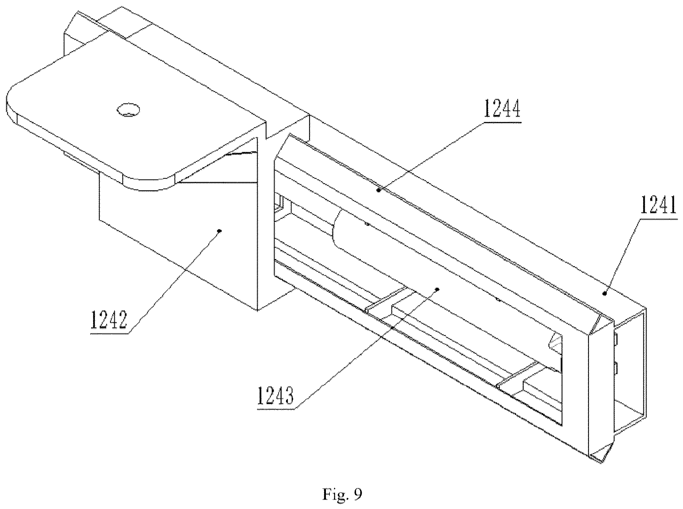

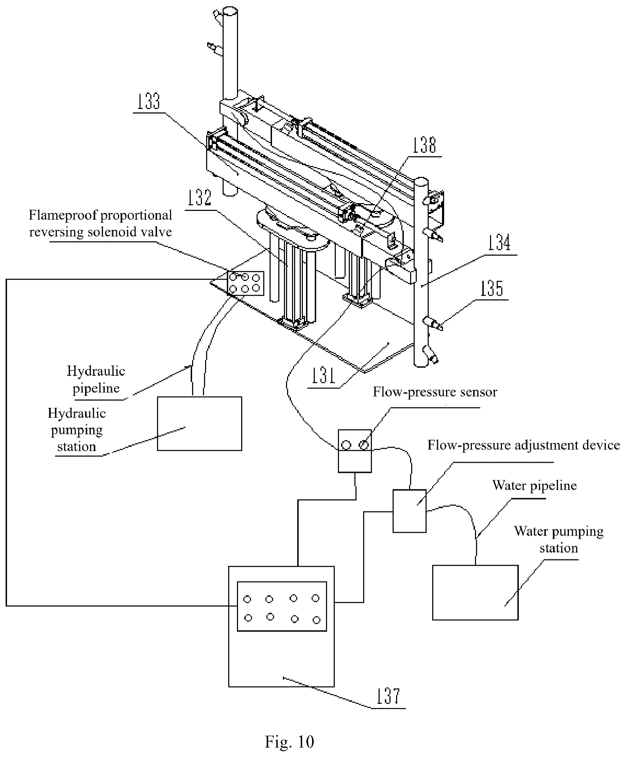

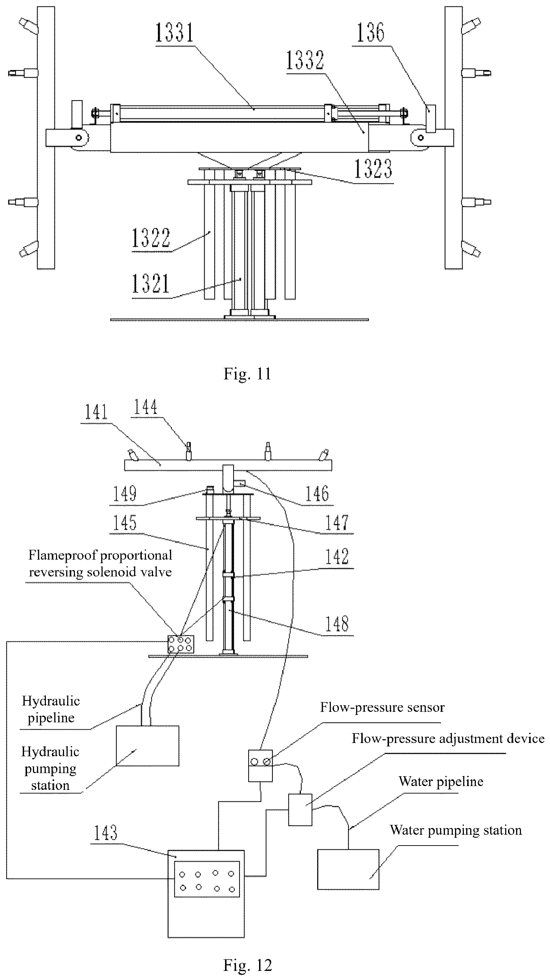

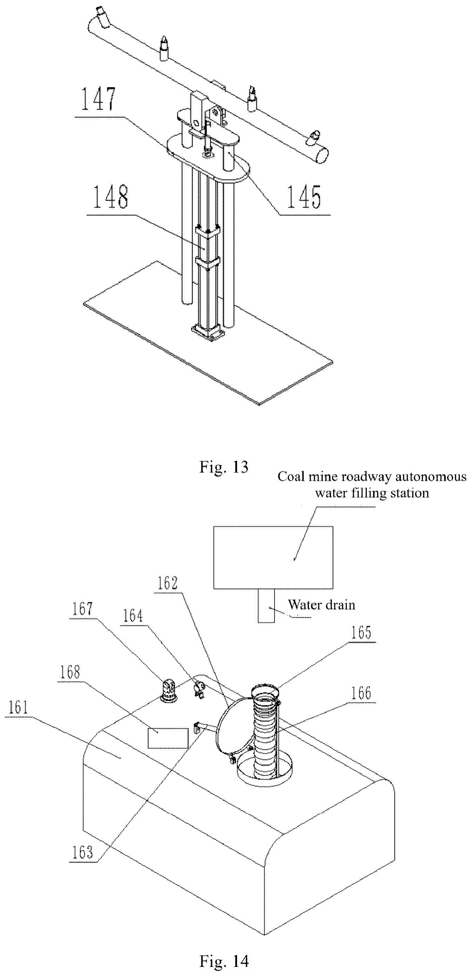

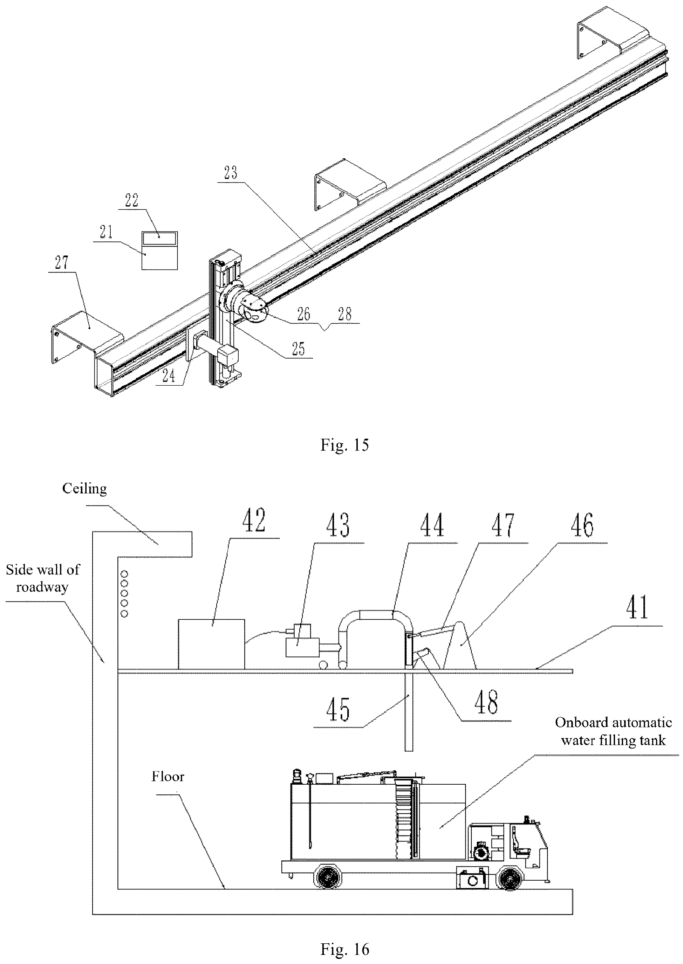

Referring to Figs. 1-16, a dust cleaning system for coal mine rubber-tired cart auxiliary transport roadways comprises coal mine rubber-tired cart auxiliary transport roadway dust cleaning robots 1, coal mine roadway dust online monitoring stations 5, charging stations 3, coal mine underground autonomous water filling stations 4 and a central control system 5; the coal mine rubber-tired cart auxiliary transport roadway dust cleaning robots 1, the dust online monitoring stations 2, the charging stations 3 and the coal mine underground autonomous water filling stations 4 are connected with the central control system 5 and controlled by the central control system 5; a plurality of coal mine rubber-tired cart auxiliary transport roadway dust cleaning robots 1 are scheduled by the central control system 5 to travel in a coal mine roadway to clean power pipelines in the roadway, two side walls of the roadway, ceiling of the roadway and floor of the roadway; the coal mine roadway dust online monitoring stations 2 are fixedly installed on the side walls of the roadway, and are used for monitoring dust deposition condition on the side walls of the roadway; cleaning parameters of the coal mine rubber-tired cart auxiliary transport roadway dust cleaning robots 1 are controlled by the central control system 5 according to the dust deposition condition fed back by the coal mine roadway dust online monitoring stations 2; the charging stations 3 are installed in the parking lot outside the roadway, and are used for charging the coal mine rubber-tired cart auxiliary transport roadway dust cleaning robots 1; a plurality of coal mine underground autonomous water filling stations 4 are installed in the roadway at a set spacing, and are used for supplying water to the coal mine rubber-tired cart auxiliary transport roadway dust cleaning robots 1.

Each coal mine rubber-tired cart auxiliary transport roadway dust cleaning robot 1 comprises a coal mine power facility dust wet wiping device 12, a wet dust flushing device, an automatic water filling tank 16, an automatic navigation system and an electro-hydraulic control system 17 which are installed on an electrically driven rubber-tired traveling platform 11; the electrically driven rubber-tired traveling platform, the coal mine power facility dust wet wiping device 11, the wet dust flushing device, the automatic navigation system and the automatic water filling tank 16 are connected with the electro-hydraulic control system 17;
The electrically driven rubber-tired traveling platform 11 is navigated by the automatic navigation system to travel, and is driven by the electro-hydraulic control system 17 to operate in the coal mine roadway; the coal mine power facility dust wet wiping device 12 is installed on a front end of the electrically driven rubber-tired traveling platform 11, and is controlled by the electro-hydraulic control system 17 to clean dust on the power pipelines 6 in the roadway; the wet dust flushing device is controlled by the electro-hydraulic control system 17 to clean dust on the two side walls, the ceiling and the floor of the roadway.

The wet dust flushing device comprises a coal mine roadway side wall wet flushing device 13, a coal mine roadway ceiling wet flushing device 14 and a roadway floor wet flushing device 15; the coal mine roadway side wall wet flushing device 13 and the coal mine roadway ceiling wet flushing device 14 adopt a telescopic structure to adapt to a size of the roadway; the roadway floor wet flushing device 15 is installed below the electrically driven rubber-tired traveling platform 11 to flush the floor of the roadway downwards; the coal mine roadway ceiling wet flushing device 14 is installed on a rear end of the electrically driven rubber-tired traveling platform 11 to flush the ceiling of the roadway upwards; the coal mine roadway side wall wet flushing device 13 is also installed on the rear end of the electrically driven rubber-tired traveling platform 11 to flush the two side walls of the roadway sidewards; the automatic water filling tank 16 is installed on the electrically driven rubber-tired traveling platform 11 to supply water to the coal mine power facility dust wet wiping device 12, the coal mine roadway side wall wet flushing device 13, the coal mine roadway ceiling wet flushing device 14 and the roadway floor wet flushing device 15.

The electrically driven rubber-tired traveling platform 11 comprises a power assembly system 111, an electrical system 112 and an automatic navigation system; the power assembly system 111 comprises a braking system, a mining explosion-proof electric steering system 117, a transmission and driving system, and a chassis assembly; the braking system comprises a service brake and a parking brake which are two independent systems, and the service brake is used for ensuring braking of the platform during normal movement; the parking brake is fail-safe to ensure a sufficient braking capacity when the traveling platform fails or a motor 116 stops working; the motor 116 is controlled by the mining explosion-proof electric steering system 117 in a mode of angular servo to replace a driver to control a direction of a whole vehicle, execute steering and assistance instructions sent by controllers through CAN communication, and realize intelligence of a vehicle steering system; the transmission and driving system comprises a transmission system and a wire-controlled driving system, and is used for driving the traveling platform to move; the electrical system 112 comprises an explosion-proof battery box 113, a frequency converter, a console 114, a sensor, an automatic protection device, a communication system and a display instrument; a vehicle control unit (VCU) and various domain controllers are integrated in the console 114 to control the power assembly system 111 and the electrical system 112. The service brake comprises a hydraulic brake and an electric feedback brake; the hydraulic brake comprises wet brakes, a brake valve, an energy accumulator and a hydraulic rubber hose; the automatic navigation system comprises an inertial navigation system, a lidar and a visual sensor which are installed on the power assembly system 111 to realize movement and navigation of the traveling platform.

The wet brakes are installed on wheels of the chassis assembly, and a braking force thereof is controlled by a pedal type hydraulic valve; the energy accumulator is used for ensuring that the platform still has a certain braking capacity when the motor 116 stops working, so as to ensure driving safety; the electric feedback brake is used for preventing the hydraulic brake from overheating, while charging a battery. The braking system is communicated with the domain controllers through a CAN to execute a deceleration instruction and a braking instruction sent by the domain controllers.

A braking pressure range of the braking system is controlled at 0-100%, with a braking accuracy of 0.5%, a brake response time delay of <200 ms, and a brake release time of <200 ms. The mining explosion-proof electric steering system 117 comprises a driving and steering axle, a steering gear and a steering wheel; the steering gear is driven by the motor 116 to provide power; a steering speed is controlled at 50-540 degrees/s; a steering accuracy is that the steering wheel has an accuracy error of being within ±1°; an angle and control signal transmission rate is ≤100 ms.

The transmission system comprises a flameproof variable frequency traction motor, a reduction gearbox, a transmission shaft, and a driving and steering axle; the driving and steering axle is driven by the flameproof variable frequency traction motor through the reduction gearbox; the wire-controlled driving system comprises the VCU, a wire-controlled pedal 115, a motor controller and a driving motor; in an autonomous driving mode, forward and backward movement of the traveling platform and speed of the vehicle are automatically controlled.

The wire-controlled driving system is communicated with the controllers through the CAN to execute an accelerator instruction sent by an onboard domain controller, and realize the function of vehicle acceleration, with an acceleration range of 0-0.3 g, an accelerator control accuracy of 0.05 g, a maximum accelerator response time delay of < 100 ms, and an accelerator release time of <100 ms.

The chassis assembly comprises a bracket and at least four explosion-proof wheels 118; elastic connection is adopted between the explosion-proof wheels 118 and the bracket, and a damping device and a stabilizer bar are provided to ensure suspension performance and stability. Each explosion-proof wheel 118 adopts a tubeless structure, and is equipped with an explosion-proof device and self-sealing material, so that the wheel can be self-repaired in an event of puncture by a sharp object.

The coal mine power facility dust wet wiping device 12 comprises the components such as a roadway cable dust wiping device 121, a wet wiping mechanical arm 122, a rotating disk 123, a transverse positioning and moving device 124 and a wet cleaning control system 125.

The roadway cable dust wiping device 121 is installed on an upper end of the wet wiping mechanical arm 122, and is used for wiping and cleaning the power pipelines 6. The roadway cable dust wiping device 121 comprises the components such as a roller mounting rack 1211, a roller brush 1212 and a spray device 1213. The roller brush 1212 is rotationally installed on the roller mounting rack 1211 through a rotating shaft 1214. A spiral swing hydraulic motor 1215 is arranged between the roller mounting rack 1211 and the wet wiping mechanical arm 122, and the roller mounting rack 1211 is driven by the spiral swing hydraulic motor 1215 to rotate to adjust an angle of the roller brush 1212. The rotating shaft 1214 is connected with a hydraulic gerotor motor 1216, and the roller brush 1212 is driven by the hydraulic gerotor motor 1216 to rotate and wipe a cable. The spray device 1213 is fixedly installed on the roller mounting rack 1211 and sprays towards the roller brush 1212. The spray device 1213 is provided with a flow-pressure adjustment device 1219 and a flow-pressure sensor; the flow-pressure adjustment device 1219 and the flow-pressure sensor are connected with the wet cleaning control system 125, and are used for monitoring and controlling spray parameters. The roadway cable dust wiping device 121 also comprises a cable perception sensor 1218 and a distance sensor 1217; the cable perception sensor 1218 and the distance sensor 1217 are connected with the wet cleaning control system 125, and are fixedly installed on the roller mounting rack 1211, and are used for perceiving whether a cable presents and a distance from the cable. The roller mounting rack 1211 is also provided with a stain guard, and one side of the roller brush 1212 is shielded by the stain guard to prevent stains from flying around when the roller brush rotates.

The wet wiping mechanical arm 122 comprises the components such as a first articulated arm 1221 and a second articulated arm 1222. One end of the first articulated arm 1221 is hinged with the rotating disk 123, and the other end is hinged with the second articulated arm 1222; the roadway cable dust wiping device 121 is hinged with one end of the second articulated arm 1222 away from the first articulated arm 1221. Hydraulic cylinders are hinged between the first articulated arm 1221 and the rotating disk 123, between the first articulated arm 1221 and the second articulated arm 1222, and between the second articulated arm 1222 and the roadway cable dust wiping device 121, respectively, and relative rotation is realized through the hydraulic cylinders. A first hydraulic cylinder 1223 is located between the first articulated arm 1221 and the rotating disk 123, and is used for adjusting an angle of the first articulated arm 1221 relative to the rotating disk 123; a second hydraulic cylinder 1224 is located between the first articulated arm 1221 and the second articulated arm 1222, and is used for adjusting an angle of the second articulated arm 1222 relative to the first articulated arm 1221; a third hydraulic cylinder (unmarked) is located between the second articulated arm 1222 and the roadway cable dust wiping device 121, and is used for adjusting an angle of the roadway cable dust wiping device 121 relative to the second articulated arm 1222.

The rotating disk 123 is a hydraulically controlled rotating disk, which comprises the components such as a foundation support, a pivoting support, a worm and a hydraulic motor. The pivoting support 1231 is rotationally installed on the foundation support, and is fixedly connected with the wet wiping mechanical arm 122. The pivoting support 1231 is provided with a worm gear, the hydraulic motor 1232 is connected with the worm, the worm is matched with the worm gear, and the pivoting support 1231 is driven to rotate by the hydraulic motor 1232 through the gear worm structure.

The transverse positioning and moving device 124 comprises the components such as a sliding table base 1241, a sliding plate 1242 and a multistage hydraulic cylinder 1243. The rotating disk 123 is fixedly installed on the sliding plate 1242, the sliding table base 1241 is provided with a sliding guide rail 1244 arranged transversely, and the sliding plate 1242 is slidably installed on the sliding guide rail 1244. The sliding plate 1242 is connected with one end of the multistage hydraulic cylinder 1243 and is driven by the multistage hydraulic cylinder 1243 to realize transverse displacement.

A working process of the coal mine power facility dust wet wiping device 12 is that: first, the cable perception sensor 1218 and the distance sensor 1217 are used to detect whether a cable presents and a distance from the cable, and detection results are transmitted to the wet cleaning control system 125; then the components such as the wet wiping mechanical arm 122, the rotating disk 123, and the transverse positioning and moving device 124 are controlled by the wet cleaning control system 125 according to the detection results to enable the roadway cable dust wiping device 121 to adaptively track and fit positions and shapes of the power pipelines 6; next, the flow-pressure adjustment device 1219 and the flow-pressure sensor are controlled by the wet cleaning control system 125 according to preset spray parameters to make the spray device 1213 spray an appropriate amount of cleaning liquid to the roller brush 1212; at the same time, the hydraulic gerotor motor 1216 and the spiral swing hydraulic motor 1215 are controlled by the wet cleaning control system 125 according to a preset rotational speed parameter to make the roller brush 1212 rotate at an appropriate speed and angle to wetly wipe the power pipelines 6; finally, the traveling platform moves along the direction of roadway and the direction of the power pipelines 6 to realize continuous cleaning of the power pipelines 6.

The coal mine roadway side wall wet flushing device 13 comprises a base 131, lifting arms 132, telescopic arms 133 and water spray frames 134; the telescopic arms 133 are fixedly installed on the lifting arms 132, and the water spray frames 134 are fixedly installed on one end of each telescopic arm 133 away from the lifting arms 132; the water spray frames 134 are provided with spray heads 135, and the spray heads 135 are connected with a water pumping device; the water spray frames 134 are driven by the lifting arms 132 and the telescopic arms 133 to realize position and state adjustment.

Each water spray frame 134 comprises a main pipe and a plurality of branch pipes, the main pipe is connected with the telescopic arms 133, and the branch pipes are perpendicularly connected with the main pipe and uniformly distributed along the main pipe; the spray heads 135 are arranged on end parts of the branch pipes and aligned with the two side walls along an axis direction of each branch pipe.

Each lifting arm 132 comprises a lifting cylinder 1321, guide posts 1322 and a sliding block 1323, a piston rod of the lifting cylinder 1321 is connected with the sliding block 1323, the sliding block 1323 slides up and down along the guide posts 1322, and the telescopic arms 133 are fixedly installed on the sliding block 1323. Each telescopic arm 133 comprises a telescopic cylinder 1331 and two mutually sheathed metal pipes 1332, one metal pipe 1332 is fixedly installed on the sliding block 1323, the other metal pipe 1332 is fixedly installed on the water spray frame 134, a piston rod of the telescopic cylinder 1331 is connected with one metal pipe 1332, and the other end is connected with the other metal pipe 1332. Two telescopic arms 133 are telescoped towards two ends of the lifting arms 132, respectively, and each telescopic arm 133 is provided with at least one water spray frame 134.

The lifting arms 132 and the telescopic arms 133 are installed on the base 131; the base 131 is also provided with a wheel set used for moving the device in the roadway. One end of each telescopic arm 133 near the water spray frame 134 is provided with a steering mechanism 136, the water spray frame 134 is installed on the steering mechanism 136, and an included angle between a water flow of each nozzle 135 and the two side walls of the roadway is controlled by the steering mechanism 136.

The coal mine roadway side wall wet flushing device 13 of the embodiment also comprises a side wall control system 137; the side wall control system 137 is connected with the water pumping device, the lifting arms 132, the telescopic arms 133 and the steering mechanisms 136, and is used for controlling the start, stop and operation parameters of the water pumping device, the lifting arms 132, the telescopic arms 133 and steering mechanisms 136. Each telescopic arm 133 is also provided with a distance meter 138 connected with the side wall control system 137 for measuring a distance to each side wall of the roadway.

A working process of the coal mine roadway side wall wet flushing device 13 is that: first, the coal mine roadway side wall wet flushing device 13 is installed on the electrically driven rubber-tired traveling platform 11 and transported to the roadway that needs to be cleaned. Then the side wall control system 137 is started, and relevant parameters are input. At this time, the sliding blocks 1323 will be driven by the lifting cylinders 1321 to move along the guide posts 1322, and synchronously drive the telescopic cylinders 1331 and the metal pipes 1332 to extend or retract along the two ends of the lifting arms 132. When the sliding blocks 1323 move to appropriate positions, the water spray frames 134 will be kept at a certain distance from a top part of the roadway. At the same time, the metal pipes 1332 will be driven by the telescopic cylinders 1331 to extend or retract along the two ends of the lifting arms 132. When the metal pipes 1332 extend to appropriate lengths, the water spray frames 134 will be kept at a certain distance from the two side walls of the roadway. In addition, the included angle between the water flow of each nozzle 135 and the two side walls of the roadway will be adjusted by the steering mechanism 136 according to the input parameters. After all positions and angles are adjusted, the water pumping device can be started to start a flushing operation. At this time, water will be delivered to each nozzle 135 by the water pumping device through the main pipe and the branch pipes and jet out from the nozzles 135 at a high pressure. Since the nozzles 135 are aligned with the two side walls along the axis direction of each branch pipe, and the branch pipes are uniformly distributed along the main pipe, complete coverage and uniform flushing of the two side walls of the roadway can be realized. After flushing is completed, the water pumping device can be stopped, and the lifting cylinders 1321, the telescopic cylinders 1331 and the steering mechanisms 136 can be retracted.

The coal mine roadway ceiling wet flushing device 14 comprises a water spray frame 141, a lifting mechanism 142 and a ceiling control system 143; the water spray frame 141 is fixedly installed on a top end of the lifting mechanism 142, and the water spray frame 141 is driven by the lifting mechanism 142 to rise and fall to adapt to a height of the ceiling; the water spray frame 141 is provided with a plurality of nozzles 144, and the nozzles 144 are communicated with a water pumping device to spray water and flush the ceiling of the roadway. The water spray frame 141 comprises a water collecting pipe and a guide frame 145; the water collecting pipe is installed on the guide frame 145, and the guide frame 145 is installed on the top end of the lifting mechanism 142 and is slidably connected with the lifting mechanism 142; the guide frame 145 is driven by the lifting mechanism 142 to slide up and down, thereby driving the water collecting pipe to move. The lifting mechanism 142 comprises a fixed frame 147 and a lifting cylinder 148; the fixed frame 147 has a guide hole, and the guide frame 145 is slidably installed in the guide hole; a telescopic end of the lifting cylinder 148 passes through the fixed frame 147 and is connected with the guide frame 145 to drive the guide frame 145 to slide in the guide hole.

A rotating mechanism 146 is arranged between the water collecting pipe and the guide frame 145, and an angle of the water collecting pipe is adjusted by the rotating mechanism 146, thereby changing an included angle between a water flow of each nozzle 144 and the ceiling. The nozzles 144 are rotating nozzles, so the water spraying direction and range of which can be adjusted.

The coal mine roadway ceiling wet flushing device 14 of the embodiment also comprises the ceiling control system 143 and a traveling platform; the ceiling control system 143 is connected with the water pumping device, the lifting mechanism 142 and the rotating mechanism 146, and is used for controlling the start, stop and operation parameters of the water pumping device, the lifting mechanism 142 and the rotating mechanism 146. The lifting mechanism 142 is also provided with a distance meter 149 connected with the ceiling control system 143 for measuring a distance to the ceiling of the roadway.

A working process of the coal mine roadway ceiling wet flushing device 14 is that: first, the coal mine roadway ceiling wet flushing device 14 is installed on the electrically driven rubber-tired traveling platform 11, connected with the automatic water filling tank 16, and then moved to the roadway that needs to be flushed, and the ceiling control system 143 is started. Operating states of the lifting mechanism 142 and the rotating mechanism 146 are automatically adjusted by the ceiling control system 143 according to the data measured by the distance meter 149, thus to enable the water spray frame 141 to adapt to the ceiling of the roadway with different heights and shapes, and enable the nozzles 144 to align with the ceiling of the roadway. Next, the water pumping device is started to enable the nozzles 144 to spray water and flush the ceiling of the roadway. During flushing, the water spraying direction and range of the nozzles 144 can be adjusted as required to realize omnidirectional flushing of the ceiling of the roadway.

The roadway floor wet flushing device 15 is installed on front and rear ends of the electrically driven rubber-tired traveling platform 11 and is located on the bottom of the electrically driven rubber-tired traveling platform 11 to flush the floor of the roadway in a traveling process of the electrically driven rubber-tired traveling platform 11.

The automatic water filling tank 16 comprises a tank body 161, a water tank cover 162, a cover opening mechanism 163, a liquid level sensor 164 and a water tank control system 168; the tank body 161 is provided with a water inlet, and the water tank cover 162 is installed on the water inlet; the cover opening mechanism 163 installed on one side of the water inlet and is connected with the water tank cover 162, and the cover opening mechanism 163 is controlled by the water tank control system 168 to drive the water tank cover 162 to flip and realize opening and closing of the water inlet; the liquid level sensor 164 is installed in the tank body 161 and is used for monitoring a water level in the tank body 161 and feeding water level information back to the water tank control system 168; the water tank control system 168 determines whether water needs to be filled according to the water level information fed back by the liquid level sensor 164, and controls the cover opening mechanism 163 and a water filling device to conduct an automatic water filling operation.

A lifting mechanism 166 and a telescopic corrugated pipe 165 are arranged in the water inlet, the lifting mechanism 166 is fixedly installed in the water inlet, one end of the corrugated pipe 165 is fixedly installed in the water inlet, and the other end is connected with a telescopic end of the lifting mechanism 166 to be driven by the lifting mechanism 166 to extend or retract along the water inlet.

The lifting mechanism 166 is an electric or hydraulic or pneumatic telescopic device. The cover opening mechanism 163 is an electric or hydraulic or pneumatic telescopic device, the water tank cover 162 is rotationally connected with the tank body 161, one end of the cover opening mechanism 163 is hinged with the tank body 161, and the other end is hinged with the water tank cover 162.

The tank body 161 is also provided with a lidar 167, and the lidar 167 is used for acquiring a relative position of the tank body 161 from an autonomous water filling station in the roadway to realize autonomous water filling and positioning.

When water needs to be filled, the electrically driven rubber-tired traveling platform 11 travels to a coal mine underground autonomous water filling station 4 in the roadway. Then the lidar 167 is started to scan a surrounding environment, and scan results are sent to the water tank control system 168. When the coal mine underground autonomous water filling station is detected by the lidar 167, a relative position of the automatic water filling tank from the coal mine underground autonomous water filling station will be calculated and displayed on a display screen. The position and direction of the traveling platform and the automatic water filling tank can be adjusted by an operator according to the information on the display screen to enable the position and direction to align with the autonomous water filling station. When alignment is completed, the automatic water filling operation is started. At this time, the current water level in the tank body 161 will be detected by the liquid level sensor 164 and fed back to the water tank control system 168. If the current water level is lower than a preset value, it means that water needs to be filled. At this time, the water tank cover 162 will be driven by the cover opening mechanism 163 to flip and open the water inlet, and the lifting mechanism 166 and the corrugated pipe 165 are started simultaneously. The corrugated pipe 165 will be driven by the lifting mechanism 166 to extend outward along the water inlet and be connected with an outlet on the autonomous water filling station. Then a valve of a coal mine underground autonomous water filling station is opened to start filling water to the automatic water filling tank 16. When the liquid level sensor 164 detects that the current water level has reached the preset value, the water tank control system 168 will be informed; at this time, the valve of the coal mine underground autonomous water filling station is closed to stop filling water, and the cover opening mechanism 163 and the lifting mechanism 166 are closed synchronously. The water tank cover 162 will be driven by the cover opening mechanism 163 to flip and close the water inlet, and the lifting mechanism 166 and the corrugated pipe 165 are retracted simultaneously. Thus, the automatic water filling operation is completed.

Each coal mine roadway dust online monitoring station 2 comprises a monitoring system 21, a moving guide rail 23 and a dust thickness sensor 26. The monitoring system 21 is provided with a display screen 22 used for displaying dust data online. The moving guide rail 23 is fixedly installed on the side walls of the roadway, a mounting rack 27 is arranged below the moving guide rail 23, and the mounting rack 27 is used for fixing the moving guide rail 23 to make the moving guide rail 23 firmly installed on the side walls of the roadway. The dust thickness sensor 26 is slidably installed on the moving guide rail 23 through a rotating device 28, is connected with the monitoring system 21, and is used for detecting the dust deposition condition on the side walls of the roadway and transmitting the data to the monitoring system 21.

The moving guide rail 23 is provided with a traction device 24, and the dust thickness sensor 26 is installed on the traction device 24. The traction device 24 is in sliding fit with the moving guide rail 23 and is controlled by the monitoring system 21 to slide along the moving guide rail 23, so that the dust thickness sensor 26 can slide along the side walls of the roadway to realize online monitoring of a dust thickness on the side walls of the whole roadway. The traction device 24 can be a rack type or roller type or wire rope type traction device 24, and an appropriate type can be selected according to actual situations in specific implementation.

A lifting mechanism 25 is fixedly arranged on the traction device 24, and the lifting mechanism 25 is connected with the monitoring system 21. The dust thickness sensor 26 is installed on the lifting mechanism 25, and is driven by the lifting mechanism 25 to realize up and down displacement, so that the position of the dust thickness sensor 26 can be adjusted up and down to realize accurate measurement of the dust thickness on the side walls of the roadway at different heights. The lifting mechanism 25 can be a hydraulic or electric or pneumatic lifting mechanism 25, and an appropriate type can be selected according to actual situations in specific implementation.

Before the coal mine roadway dust online monitoring stations 2 are used, the coal mine roadway dust online monitoring stations 2 are installed on the side walls of a coal mine roadway that need to be monitored, the monitoring system 21 is connected with the central control system 5, and the display screen 22 is adjusted to an appropriate angle and position; During use, the monitoring system 21 is started, the traction device 24 and the lifting mechanism 25 are controlled to drive the dust thickness sensor 26 to slide along the moving guide rail 23, angle is adjusted by the rotating device 28, and scanning is conducted at different heights to make laser beams automatically focus on normal lines of various points on convex and concave surfaces of the side walls of the roadway, and realize real-time automatic monitoring of dust thickness in convex and concave areas of the side walls of the roadway according to a laser ranging principle. Data detected is transmitted to the monitoring system 21 by the dust thickness sensor 26, and is processed and analyzed by the monitoring system 21, and results are output to the display screen 22 and uploaded to the central control system 5 to realize real-time display and early warning of a dust thickness.

Each coal mine underground autonomous water filling station 4 comprises a fixed platform 41, a water filling control system 42, an electric control valve 43, a water filling pipe and a water pipe retracting/extending device 46; a plurality of coal mine underground autonomous water filling stations are arranged along the coal mine roadway at a designed distance. The fixed platform 41 is installed on one side wall of the roadway or hoisted on the ceiling of the roadway, and is at a set height from the floor of the roadway; the water filling control system 42, the electric control valve 43, the water filling pipe and the water pipe retracting/extending device 46 are installed on the fixed platform 41; the electric control valve 43 is installed on the water filling pipe; the electric control valve 43 and the water pipe retracting/extending device 46 are connected with the water filling control system 42 and controlled by the water filling control system 42; a water outlet end of the water filling pipe is connected with the water pipe retracting/extending device 46 and controlled by the water pipe retracting/extending device 46, thus to make the water filling pipe drain water vertically downwards when filling water and bend horizontally in the fixed platform 41 when being stored.

The water filling pipe comprises a water inlet pipe 44 and a movable pipe 45; the water inlet pipe 44 is fixedly installed on the fixed platform 41; the movable pipe 45 is connected with the water pipe retracting/extending device 46, and is communicated with the water inlet pipe 44 through a corrugated pipe; the movable pipe 45 is driven by the water pipe retracting/extending device 46 to realize vertical and horizontal bending.

The water pipe retracting/extending device 46 comprises a fixed frame 46, a cylinder 47 and a bending frame 48; the bending frame 48 is provided with a fixed groove, the water filling pipe is fixedly installed in the fixed groove, and the bending frame 48 is rotationally installed on the fixed frame 46; one end of the cylinder 47 is hinged with the fixed frame 46, and the other end is hinged with the bending frame 48 and used for driving the bending frame 48 to rotate, thereby driving the water filling pipe to bend.

When the electrically driven rubber-tired traveling platform 11 travels into a certain range from the coal mine underground autonomous water filling station 4 for water filling, the position of the automatic water filling tank 16 is sensed by a position sensor, and a signal is transmitted to the water filling control system 42. The water filling control system 42 determines whether the automatic water filling tank 16 needs to be filled with water according to a control signal of the central control system 5, and sends instructions to the electric control valve 43 and the water pipe retracting/extending device 46. The water inlet pipe 44 is opened or closed by the electric control valve 43; the movable pipe 45 is driven by the water pipe retracting/extending device 46 to bend.

Finally, it should be noted that the above embodiments are only used for describing, rather than limiting the technical solution of the present invention. Although the present invention is described in detail with reference to the preferred embodiments, those ordinary skilled in the art shall understand that the technical solution of the present invention can be amended or equivalently replaced without departing from the purpose and the scope of the technical solution. The amendment or equivalent replacement shall be covered within the scope of the claims of the present invention.

## Claims

1. A dust cleaning system for coal mine rubber-tired cart auxiliary transport roadways, **characterized in that**: the system comprises coal mine rubber-tired cart auxiliary transport roadway dust cleaning robots, coal mine roadway dust online monitoring stations, charging stations, coal mine underground autonomous water filling stations and a central control system;
the coal mine rubber-tired cart auxiliary transport roadway dust cleaning robots, the dust online monitoring stations, the charging stations and the coal mine underground autonomous water filling stations are connected with the central control system and controlled by the central control system;
a plurality of coal mine rubber-tired cart auxiliary transport roadway dust cleaning robots are scheduled by the central control system to travel in a coal mine roadway to clean power pipelines in the roadway, two side walls of the roadway, ceiling of the roadway and floor of the roadway;
the coal mine roadway dust online monitoring stations are fixedly arranged on the side walls of the roadway, and are used for monitoring dust deposition condition on the side walls of the roadway; cleaning parameters of the coal mine rubber-tired cart auxiliary transport roadway dust cleaning robots are controlled by the central control system according to the dust deposition condition fed back by the coal mine roadway dust online monitoring stations;
the charging stations are arranged in the parking lot outside the roadway, and are used for charging the coal mine rubber-tired cart auxiliary transport roadway dust cleaning robots;
a plurality of coal mine underground autonomous water filling stations are arranged in the roadway at a set spacing, and are used for supplying water to the coal mine rubber-tired cart auxiliary transport roadway dust cleaning robots.

2. The dust cleaning system for coal mine rubber-tired cart auxiliary transport roadways as claimed in claim 1, **characterized in that**: each coal mine rubber-tired cart auxiliary transport roadway dust cleaning robot comprises a coal mine power facility dust wet wiping device, a wet dust flushing device, an automatic navigation system and an electro-hydraulic control system which are arranged on an electrically driven rubber-tired traveling platform; the electrically driven rubber-tired traveling platform, the coal mine power facility dust wet wiping device, the wet dust flushing device and the automatic navigation system are connected with the electro-hydraulic control system; the electro-hydraulic control system is communicated with the central control system;
the electrically driven rubber-tired traveling platform, the coal mine power facility dust wet wiping device and the wet dust flushing device are provided with sensors used for detecting positions and operating states thereof, the sensors are connected with the electro-hydraulic control system, and the devices are controlled to operate by the electro-hydraulic control system according to signals of the sensors;
the electrically driven rubber-tired traveling platform is navigated by the automatic navigation system to travel, and is controlled by the electro-hydraulic control system to operate in the coal mine roadway; the coal mine power facility dust wet wiping device is arranged on a front end of the electrically driven rubber-tired traveling platform, and is controlled by the electro-hydraulic control system to clean dust on the power pipelines in the roadway; the wet dust flushing device is controlled by the electro-hydraulic control system to clean dust on the two side walls, the ceiling and the floor of the roadway.

3. The dust cleaning system for coal mine rubber-tired cart auxiliary transport roadways as claimed in claim 2, **characterized in that**: the coal mine power facility dust wet wiping device comprises a transverse positioning and moving device, a wet wiping mechanical arm and a coal mine roadway cable dust wiping device; the transverse positioning and moving device is fixed on the front end of the electrically driven rubber-tired traveling platform, the coal mine roadway cable dust wiping device is arranged on an upper end of the wet wiping mechanical arm, and the wet wiping mechanical arm is rotationally connected with the transverse positioning and moving device through a hydraulic rotating disk; the wet wiping mechanical arm is driven by the transverse positioning and moving device to realize transverse movement, and is driven by the hydraulic rotating disk to realize circumferential angle adjustment; the coal mine roadway cable dust wiping device is driven by the wet wiping mechanical arm to realize position and angle adjustment.

4. The dust cleaning system for coal mine rubber-tired cart auxiliary transport roadways as claimed in claim 3, **characterized in that**: the coal mine roadway cable dust wiping device comprises a roller mounting rack, a roller brush and a spray device; the roller brush is rotationally installed on the roller mounting rack through a rotating shaft; a spiral swing hydraulic motor is arranged between the roller mounting rack and the mechanical arm, and the roller mounting rack is driven by the spiral swing hydraulic motor to rotate to adjust an angle of the roller brush;
the rotating shaft is connected with a hydraulic gerotor motor, and the roller brush is driven by the hydraulic gerotor motor to rotate and wipe a cable; the spray device is fixedly arranged on the roller mounting rack and sprays towards the roller brush; the wet wiping mechanical arm comprises a first articulated arm and a second articulated arm; one end of the first articulated arm is hinged with the rotating disk, and the other end is hinged with the second articulated arm; the coal mine roadway cable dust wiping device is hinged with one end of the second articulated arm away from the first articulated arm; hydraulic cylinders are hinged between the first articulated arm and the rotating disk, between the first articulated arm and the second articulated arm, and between the second articulated arm and the coal mine roadway cable dust wiping device, respectively, and relative rotation is realized through the hydraulic cylinders.

5. The dust cleaning system for coal mine rubber-tired cart auxiliary transport roadways as claimed in claim 3, **characterized in that**: the transverse positioning and moving device comprises a sliding table base, a sliding plate and a multistage hydraulic cylinder; the hydraulic rotating disk is arranged on the sliding plate, the sliding table base is provided with a sliding guide rail arranged transversely, and the sliding plate is slidably arranged on the sliding guide rail; the sliding plate is connected with the multistage hydraulic cylinder and is driven by the multistage hydraulic cylinder to realize transverse displacement; the hydraulic rotating disk is provided with a mounting position used for connecting the wet wiping mechanical arm.

6. The dust cleaning system for coal mine rubber-tired cart auxiliary transport roadways as claimed in claim 2, **characterized in that**: the wet dust flushing device comprises a coal mine roadway side wall wet flushing device, a coal mine roadway ceiling wet flushing device and a roadway floor wet flushing device; the coal mine roadway side wall wet flushing device and the coal mine roadway ceiling wet flushing device adopt a telescopic structure to adapt to a size of the roadway; the roadway floor wet flushing device is arranged below the electrically driven rubber-tired traveling platform to flush the floor of the roadway downwards; the coal mine roadway ceiling wet flushing device is arranged on a rear end of the electrically driven rubber-tired traveling platform to flush the ceiling of the roadway upwards; the coal mine roadway side wall wet flushing device is also arranged on the rear end of the electrically driven rubber-tired traveling platform to flush the two side walls of the roadway sidewards.

7. The dust cleaning system for coal mine rubber-tired cart auxiliary transport roadways as claimed in claim 6, **characterized in that**: the coal mine roadway side wall wet flushing device comprises lifting arms, telescopic arms and water spray frames; the telescopic arms are fixedly arranged on the lifting arms, and the water spray frames are fixedly arranged on one end of each telescopic arm away from the lifting arms; the water spray frames are provided with spray heads; the water spray frames are driven by the lifting arms and the telescopic arms to realize transverse and height position adjustment relative to the two side walls of the roadway; each water spray frame comprises a main pipe and a plurality of branch pipes, the main pipe is connected with the telescopic arms, the branch pipes are perpendicularly connected with the main pipe and uniformly distributed along the main pipe; the spray heads are arranged on end parts of the branch pipes and aligned with the two side walls along an axis direction of each branch pipe; two telescopic arms are telescoped towards two ends of the lifting arms, respectively, and each telescopic arm is provided with at least one water spray frame.

8. The dust cleaning system for coal mine rubber-tired cart auxiliary transport roadways as claimed in claim 6, **characterized in that**: the coal mine roadway ceiling wet flushing device comprises a water spray frame and a lifting mechanism; the water spray frame is fixed on a top end of the lifting mechanism, and the water spray frame is driven by the lifting mechanism to rise and fall to adapt to a height of the ceiling; the water spray frame is provided with a plurality of nozzles, and the nozzles are communicated with a water pumping device to spray water and flush the ceiling of the roadway; the water spray frame comprises a water collecting pipe and a guide frame; the water collecting pipe is arranged on the guide frame, and the guide frame is arranged on the top end of the lifting mechanism and is slidably connected with the lifting mechanism; the guide frame is driven by the lifting mechanism to slide up and down, thereby driving the water collecting pipe to move; a rotating mechanism is arranged between the water collecting pipe and the guide frame, and an angle of the water collecting pipe is adjusted by the rotating mechanism, thereby changing an included angle between a water flow of each nozzle and the ceiling.

9. The dust cleaning system for coal mine rubber-tired cart auxiliary transport roadways as claimed in claim 2, **characterized in that**: each coal mine underground autonomous water filling station comprises a fixed platform, a water filling control system, an electric control valve, a water filling pipe and a water pipe retracting/extending device; the fixed platform is fixedly arranged on one side wall of the roadway or hoisted on the ceiling of the roadway, and is at a set height from the floor of the roadway; the water filling control system, the electric control valve, the water filling pipe and the water pipe retracting/extending device are arranged on the fixed platform; the electric control valve is arranged on the water filling pipe; the electric control valve and the water pipe retracting/extending device are connected with the water filling control system and controlled by the water filling control system; the water filling control system is communicated with the central control system;
a water outlet end of the water filling pipe is connected with the water pipe retracting/extending device and controlled by the water pipe retracting/extending device, thus to make the water filling pipe drain water vertically downwards when filling water and bend horizontally in the fixed platform when being stored; the water filling pipe comprises a water inlet pipe and a movable pipe; the water inlet pipe is fixed on the fixed platform; the movable pipe is connected with the water pipe retracting/extending device, and is communicated with the water inlet pipe through a corrugated pipe; the movable pipe is driven by the water pipe retracting/extending device to realize vertical and horizontal bending;
the electrically driven rubber-tired traveling platform is also provided with an automatic water filling tank; the automatic water filling tank comprises a tank body, a water tank cover and a cover opening mechanism; a bottom of the tank body is provided with a water outlet pipe; the water outlet pipe is connected with the coal mine power facility dust wet wiping device and the wet dust flushing device, respectively, and is used for supplying cleaning water; a liquid level sensor is arranged in the tank body, the water tank cover is rotationally arranged on a water inlet of the tank body through the cover opening mechanism, and the water tank cover is driven by the cover opening mechanism according to liquid level information fed back by the liquid level sensor to realize opening and closing of the water inlet; a lifting mechanism and a telescopic corrugated pipe are arranged in the water inlet, the lifting mechanism is fixedly arranged in the water inlet, one end of the corrugated pipe is fixedly arranged in the water inlet, and the other end is connected with a telescopic end of the lifting mechanism to be driven by the lifting mechanism to extend or retract along the water inlet; the automatic water filling tank cooperates with the coal mine underground autonomous water filling station to realize automatic water filling.

10. The dust cleaning system for coal mine rubber-tired cart auxiliary transport roadways as claimed in claim 1, **characterized in that**: each coal mine roadway dust online monitoring station comprises a monitoring system, a moving guide rail and a dust thickness sensor; the dust thickness sensor is slidably arranged on the moving guide rail, and is used for detecting the dust deposition condition on the side walls of the roadway; the moving guide rail is fixedly arranged on the side walls of the roadway; the dust thickness sensor is connected with the monitoring system, the monitoring system is communicated with the central control system, and data of the dust thickness sensor is acquired and a dust thickness is output to the central control system by the monitoring system;
the moving guide rail is provided with a traction device, the dust thickness sensor is arranged on the traction device, and the traction device is in sliding fit with the moving guide rail and is controlled by the monitoring system to slide along the moving guide rail;
a lifting mechanism is fixedly arranged on the traction device, and the lifting mechanism is connected with the monitoring system; the dust thickness sensor is arranged on the lifting mechanism, and is driven by the lifting mechanism to realize up and down displacement.
